# EUROPÄISCHE PATENTSCHRIFT

(11) **EP 0 490 238 B1**
(45) Veröffentlichungstag und Bekanntmachung des Hinweises auf die Patenterteilung: **28.05.1997**
(21) Anmeldenummer: 91120759.5
(22) Anmeldetag: 03.12.1991
(51) Int. Cl.: A61C 13/277

(54) **Hilfsteil zum Sichern eines abnehmbaren Zahnprothesenteils an einem festsitzenden Zahnprothesenteil**
Auxiliary element for removably securing a partial dental prosthesis to a fixed prosthetic element
Elément destiné au verrouillage d'un appareil de prothèse dentaire amovible à un élément prothétique fixe

(30) Priorität: 12.12.1990 DE 4039654
(43) Veröffentlichungstag der Anmeldung: 17.06.1992
(73) Patentinhaber: FR- KONSTRUKTIONSELEMENTE FÜR ZAHNPROTHETIK GmbH & CO, D-67620 Kaiserslautern (DE)
(72) Erfinder: Klein, Franz Joseph, W-8944 Grönenbach (DE); Obersat, Adam, W-6750 Kaiserslautern (DE)
(74) Vertreter: Bernhardt, Winfrid, Dr.-Ing.

(56) Entgegenhaltungen:
- EP-A- 0 136 671
- WO-A-90/09766
- DE-A- 1 791 284
- GB-A- 1 152 177

## Beschreibung

Die Erfindung betrifft ein Hilfsteil zum Sichern eines abnehmbaren Zahnprothesenteils an einem festsitzenden Zahnprothesenteil in einer Verbindung der beiden Zahnprothesenteile, in der die beiden Zahnprothesenteile ineinanderschiebbar und in der Endstellung starr, aber lösbar zusammengesetzt sind und mittels eines gegen das eine Zahnprothesenteil abgestützten und hinter einem schrägen Gegenlager des anderen, insbesondere des festsitzenden, Zahnprothesenteils federnd einrastenden Riegels gesichert sind.

Ein etwas anderes Retentionselement als ein Riegel ist aus WO-A-9009766 bekannt. Dort ist eine Teleskopkrone vorgeschlagen mit einem flach an der Innenoberfläche der Sekundärkrone gehaltenen federnden Retentionselement, das eine Raste aufweist, für die in der Primärkrone eine formgleiche Rastausnehmung angeordnet ist; Die Raste und die Rastausnehmung sind beide halbkugelförmig. Bei der Herstellung der Teleskopkrone werden die Halterung für das Retentionselement und die Rastausnehmung jeweils durch ein konturengleiches, verlorenes Formteil aus rückstandslos verbrennbarem Kunststoff gebildet.

Eine Sicherung der eingangs genannten Art ist beispielsweise aus der EP-A-0 136 671 bekannt. Als Riegel ist dort eine in einem flachen Gehäuse gehaltene, etwa S-förmig gebogene Feder vorgeschlagen, die in eine gefräste Kerbe als Gegenlager einrastet und so ein Geschiebe sichert. Die DE-A-38 38 222 und DE-U-90 07 178 befassen sich mit Weiterentwicklungen der Feder. Nach der EP-A-0 405 567 ist auf die Feder vorne eine schmale, langgestreckte Rolle aufgesetzt.

Die Weiterentwicklungen dienen dem Zweck, einerseits eine genügende Haltekraft des Riegels zur Verfügung zu stellen und andererseits die erforderliche Lösekraft begrenzt zu halten.

Die gleiche Aufgabe liegt, mit weiter erhöhter Anforderung, der Erfindung zugrunde.

Die erfindungsgemäße Lösung der Aufgabe besteht darin, daß ein vorgefertigtes Einsatzteil des genannten anderen Zahnprothesenteils oder seines Modells oder seiner Gießform das Gegenlager mit einer schrägen Anlagefläche für den Riegel bildet, derart, daß der Riegel an keiner anderen Fläche anstößt.

Das industriell vorgefertigte Gegenlager, passend zu dem Riegel und seinem Gehäuse mitgeliefert, ist hinsichtlich seiner Tiefe und Breite und insbesondere des Winkels seiner Abzugsschräge genauer als die gefräste Kerbe o. dgl., jedenfalls ist seine Genauigkeit sichergestellt. Zu der genauen Funktion gehört die Anlage des Riegels allein an der schrägen Anlagefläche.

Der eigentliche Umfang der möglichen Verbesserungen wird aber dann in der weiteren Ausgestaltung der Erfindung ausgeschöpft, daß das Einsatzteil ferner mindestens eine Anlagefläche zur Positionierung des den Riegel haltenden Gehäuses in der zum Gegenlager gehörigen Lage beim Modellieren des genannten einen Zahnprothesenteils aufweist.

Damit wird über die Form und Abmessungen des Gegenlagers selbst hinaus auch die richtige räumliche Anordnung des Gegenlagers zu dem Riegel sichergestellt. Es bestehen im Prinzip absolut definierte Verhältnisse.

Schließlich kann das Gegenlager auch noch einen Anschlag zur Begrenzung des Ineinanderschiebens der beiden Prothesenteile und/oder eine Rille bilden, die man als Führung für das Ineinanderschieben der beiden Zahnprothesenteile benötigt und bisher fräst.

Das ersetzt weitere sonst von Hand auszuführende Formgebungen und erhöht insofern die Genauigkeit und Sicherheit noch im weiteren Umfeld, die auch der Funktion des Riegels und Gegenlagers zugute kommt.

In der ersten Variante ist das Hilfsteil vorgefertigtes Einsatzteil des genannten anderen, in der Regel des festsitzenden, Zahnprothesenteils.
Es kann aus einer hochschmelzenden Legierung bestehen, so daß es beim Modellieren des Prothesenteils in Wachs mit eingebaut wird und beim Gießen des Prothesenteils in einer niedriger schmelzenden Legierung erhalten bleibt, die sich dabei mit dem Einsatzteil verbindet. Das Einsatzteil könnte aber auch, nachdem es in das Modell eingeformt worden ist, wieder herausgenommen und später angelötet oder angeklebt werden. Dann besteht mehr Freiheit in der Auswahl des Materials. Ankleben erlaubt sogar, das Gegenlager aus einem geeigneten Kunststoff herzustellen. Ein eingegossenes oder angeklebtes Gegenlager könnte auch aus besonders verschleißfestem keramischem Material bestehen.

In der zweiten Variante ist das Hilfsteil ein Einsatzteil nur des Modells des Zahnprothesenteils. Dafür wird es aus einem beim Gießen ausbrennenden Kunststoff bestehen.

Die dritte Variante, das Einsatzteil der Gießform, besteht zweckmäßigerweise aus keramischem Material. Es wird mit einmodelliert und erhält in einer geeigneten Weise eine Verankerung mit der später aufgebrachten Formmasse. Die Verankerung könnte in mindestens einem Vorsprung oder Rücksprung o.a. bestehen.

Das Einsatzteil in der ersten Variante ist nach einer weiteren Ausgestaltung der Erfindung ein gestanztes und geprägtes Blechteil, das vor dem genannten Gegenlager eine Wand aufweist, an der durch eine seitliche Abbiegung die genannte Rille gebildet ist, und/oder hinter dem Gegenlager eine Abwinkelung als den genannten Anschlag und/oder Anlagefläche zur Positionierung aufweist.
Dies ist eine verhältnismäßig einfache Herstellung aus Blech, jedoch umfassend.

Die Zeichnung gibt ein Ausführungsbeispiel der Erfindung wieder.
- Fig. 1: zeigt einen Ausschnitt aus einem Oberkiefer in einem senkrechtem Schnitt,
- Fig. 2: zeigt ein Gegenlager in Seitenansicht,
- Fig. 3: zeigt das Gegenlager in Vorderansicht,
- Fig. 4: zeigt das Gegenlager in Draufsicht und
- Fig. 5: zeigt das Gegenlager mit zugehörigem Riegel in einem Fig. 2 entsprechenden senkrechten Schnitt.

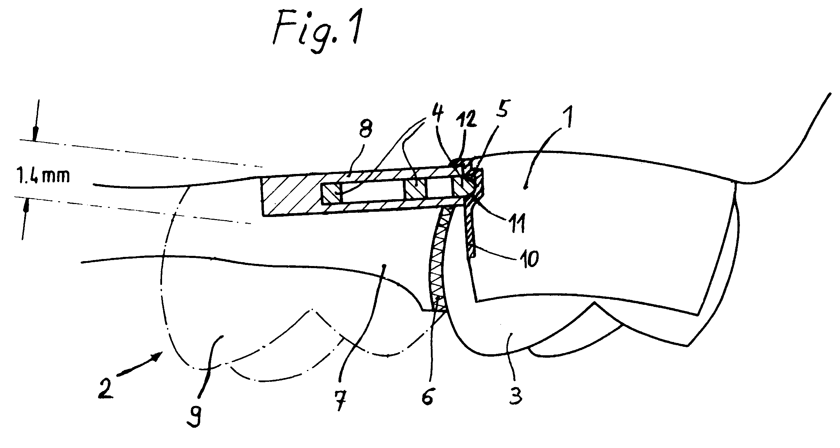

In Fig. 1 ist ein verbliebener Zahnstumpf zu erkennen, der mit einem Prothesenteil 1 fest überkront ist. Im übrigen besteht die Prothese aus einem an dem festsitzenden Prothesenteil 1 befestigten abnehmbaren Prothesenteil 2.

Das abnehmbare Prothesenteil 2 sitzt mit einer den Zahnstumpf mit dem Prothesenteil 1 vervollständigenden Außenkrone 3, deren Hohlraum der etwa konischen Form des Prothesenteils 1 angepaßt ist, auf diesem.
Es ist gegen Abrutschen von dem Prothesenteil 1 gesichert durch einen federnden Riegel 4, der in eine Kerbe 5 des festsitzenden Prothesenteils 1 greift.

Weiter im einzelnen hat das abnehmbare Prothesenteil 2 folgenden Aufbau:
An der erwähnten, aus Metall gegossenen Außenkrone 3 ist bei 6 ein gleichfalls aus Metall gegossenes Gerüst 7 angelötet. In einer Ausnehmung des Gerüstes 7 ist ein Gehäuse 8 angeordnet, in dem der durch eine etwa S-förmige Feder gebildete Riegel 4 gehalten ist. Auf das Gerüst 7 sind künstliche Zähne 9 gesetzt. Die Außenkrone 3 ist an der Kieferaußenseite mit einer z.B. keramischen Verblendung versehen, die sich auch bis über einen Teil der Kaufläche zieht.

Die Kerbe 5 ist in einem in das Prothesenteil 1 eingegossenen Einsatzteil 10 ausgebildet. Eine schräge Wand 11 der Kerbe 5 hält über den Riegel 4 das Prothesenteil 2 und drückt den Riegel 4 zurück, wenn man genügend Zug ausübt. Ein am Ende des Einsatzteils 10 abgewinkelter Anschlag 12 für das Gehäuse 8 begrenzt den Sitz in der anderen Richtung.

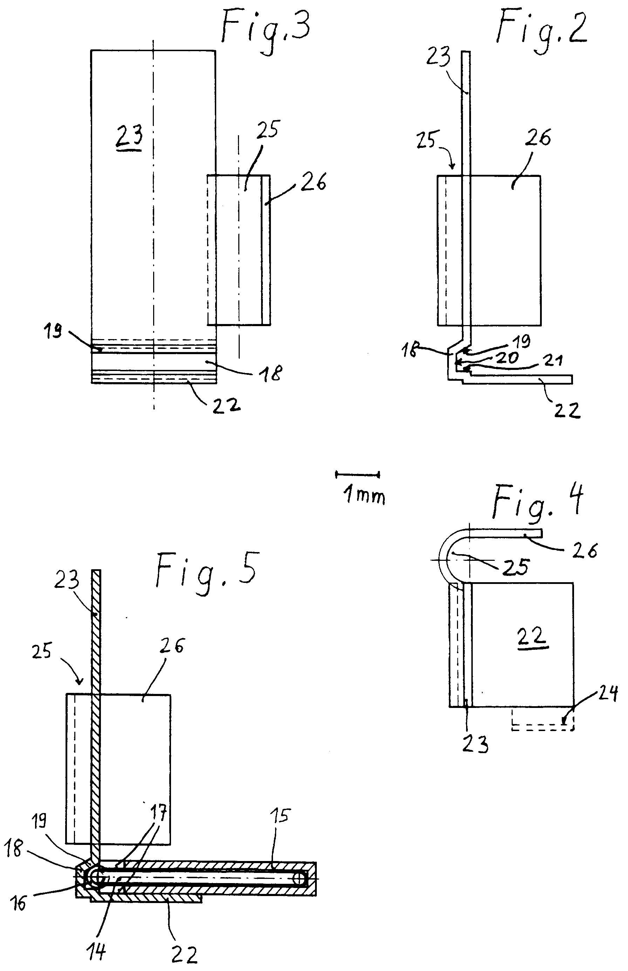

Fig. 2 bis 5 zeigen ein dem Einsatzteil 10 entsprechendes Einsatzteil 13, Fig. 5 ferner mit einem dem Riegel 4 und Gehäuse 8 entsprechenden Riegel 14 und Gehäuse 15, alle Teile weiter ausgestaltet.

Der Riegel 14 besteht wiederum aus einer in einer Ebene mehrfach gebogenen Feder, jedoch mit einer auf den vorderen, graden Schenkel der Feder als Achse aufgesetzten, schmalen, länglichen Rolle 16.
Das Gehäuse 15 hat vorne oben und unten eine Ausnehmung 17 von solcher Breite, daß die Rolle 16 beim Zurückweichen vollständig darin Platz findet. Zu beiden Seiten der Rolle ist jedoch die Feder, auf einer Seite mit einem abgewinkelten Ende, in dem Gehäuse 15 geführt.

Das Einsatzteil 13 weist ein Gegenlager 18 für den Riegel 14 mit der Rolle 16 auf. Es hat die Form eines offenen Trapezes mit einer schrägen Anlagefläche 19 für die Rolle 16. An der dem Riegel 14 senkrecht gegenüberliegenden Fläche 20 und auch an der dritten Fläche 21 stößt die Rolle 16 nicht an.

In genau zugehöriger Stellung liegt das Gehäuse 15 an einem abgewinkelten Schenkel 22 des Einsatzteils 13 an. Der Riegel 14 ist darin innerhalb seines Spiels verkantet, die Anordnung ist so spielfrei.
Zugleich stößt das Gehäuse 15 unterhalb der Fläche 21 und oberhalb der Anlagefläche 19 an das Einsatzteil 13.

Das bedeutet, die Feder des Riegels 14 wird in genau vorgesehener Länge gehalten und hat damit die genau vorgesehene - minimale - Vorspannung.
Es bedeutet ferner, daß bei Parallelverschiebung des Gehäuses 15 weiterhin in Anlage mit einer an die Anlagefläche 18 sich anschließenden, zu dem Schenkel 22 senkrechten Wand 23 des Einsatzteils 13 die Rolle 16 an der schrägen Anlagefläche 19 um ein vorgegebenes Maß zurückgedrängt wird und dabei eine genau vorgegebene Kraft überwunden werden muß, bis die Rolle 16 von ihrer schrägen Anlagefläche 19 freigekommen ist und an der Wand 23 anliegt. Diese Kraft hängt ab von dem Winkel, den die schräge Anlagefläche 19 mit der Parallelverschiebungsrichtung des Gehäuses 15, d.h. mit der Wand 23 bildet. Er liegt z.B. etwa zwischen 55 und 60°.
Im Beispiel nach Fig. 2 bis 5 ist vorgesehen, daß der Riegel um 0,4 mm zurückgedrückt wird und seine Feder dabei eine Kraft von 2,4 bis 2,5 N entwickelt. Diese wird an der Anlagefläche 19 entsprechend deren Schräge umgesetzt in eine zum Abziehen des Prothesenteils aufzuwendende Kraft von z.B. 4 N.

Das Einsatzteil 13 wird so in das festsitzende Prothesenteil und das Gehäuse 15 wird so in das abnehmbare Prothesenteil einer Prothese eingesetzt, daß die vorbeschriebenen Verhältnisse vorliegen.
Dazu dienen, wie schon weiter oben erläutert, der Schenkel 22 mit seiner Anlagefläche für die eine Wand des Gehäuses 15 und die Wand 23 wie auch der mit ihr fluchtende kleine Absatz zwischen dem Schenkel 22 und der Fläche 21 als Anlagefläche für die Vorderseite des Gehäuses 15 zur Positionierung beim Modellieren. Hier kann eine dritte, als Erweiterung und Abwinkelung an dem Schenkel 22 angebrachte Anlagefläche 24 hinzutreten, wie in Fig. 4 gestrichelt angedeutet. Dann ist das Gehäuse 15 auch in der dritten Richtung festgelegt und insoweit überhaupt keine Ungenauigkeit beim Modellieren möglich.

Der Schenkel 22 ist mit seiner Anlagefläche für das Gehäuse 15 nicht nur Modellierungshilfe, sondern auch nachher ein dem Anschlag 12 entsprechender Anschlag zur Begrenzung des Ineinanderschiebens der beiden Prothesenteile.
Gleichfalls der genauen Orientierung der beiden Prothesenteile zueinander dient eine an die Wand 23 seitlich angeformte Rille 25, die an dem festsitzenden Prothesenteil eine Führung bildet, in der ein entsprechender Vorsprung des abnehmbaren Prothesenteils eingeschoben wird. Die normalerweise vorhandene zweite solche Rille am festsitzenden Prothesenteil muß wie bisher erzeugt werden.

Soweit der Schenkel 22, die Wand 23 und das Blech 26 der Rille an der Prothese nicht gebraucht werden und stören, können sie abgeschnitten werden. Das Blech 26 kann vorher noch dazu dienen, mit einem daran angreifenden Werkzeug das ganze Einsatzteil 13 beim Modellieren zu handhaben.

## Patentansprüche

1. Hilfsteil zum Sichern eines abnehmbaren Zahnprothesenteils (2) an einem festsitzenden Zahnprothesenteil (1) in einer Verbindung (1,3) der beiden Zahnprothesenteile (1;2), in der die beiden Zahnprothesenteile (1;2) ineinanderschiebbar und in der Endstellung starr, aber lösbar zusammengesetzt sind und mittels eines gegen das eine Zahnprothesenteil (2) abgestützten und hinter einem schrägen Gegenlager (5,11;18,19) des anderen, insbesondere des festsitzenden, Zahnprothesenteils (1) federnd einrastenden Riegels (4;14) gesichert sind, wobei ein vorgefertigtes Einsatzteil (10;13) des genannten anderen Zahnprothesenteils (1) oder seines Modells oder seiner Gießform das Gegenlager mit einer schrägen Anlagefläche (11;19) für den Riegel (4;14) bildet, derart, daß der Riegel (4;14) an keiner anderen Fläche anstößt.

2. Hilfsteil nach Anspruch 1,
dadurch gekennzeichnet,
daß das Einsatzteil (10;13) des genannten anderen Prothesenteils (1) aus einer hochschmelzenden Legierung besteht, um mit dem übrigen genannten anderen Prothesenteil (1) zusammengegossen zu werden.

3. Hilfsteil nach Anspruch 1,
dadurch gekennzeichnet,
daß das Einsatzteil des Modells aus einem beim Gießen ausbrennenden Kunststoff besteht.

4. Hilfsteil nach Anspruch 1,
dadurch gekennzeichnet,
daß das Einsatzteil der Gießform aus keramischem Material besteht.

5. Hilfsteil nach einem der Ansprüche 1 bis 4,
dadurch gekennzeichnet,
daß es ferner eine Rille (25) als Führung für das Ineinanderschieben der beiden Zahnprothesenteile (1;2) bildet.

6. Hilfsteil nach einem der Ansprüche 1 bis 5,
dadurch gekennzeichnet,
daß es ferner einen Anschlag (22) zur Begrenzung des Ineinanderschiebens der beiden Prothesenteile (1;2) bildet.

7. Hilfsteil nach einem der Ansprüche 1 bis 6,
dadurch gekennzeichnet,
daß es ferner mindestens eine Anlagefläche (22;23;24) zur Positionierung eines den Riegel (14) haltenden Gehäuses (15) in der zum Gegenlager (18) gehörigen Lage beim Modellieren des genannten einen Zahnprothesenteils (2) aufweist.

8. Hilfsteil nach den Ansprüchen 1 und 5,
dadurch gekennzeichnet,
daß das Einsatzteil (10;13) des genannten anderen Prothesenteils (1) ein gestanztes und geprägtes Blechteil ist, das vor dem genannten Gegenlager (5,11;18,19) eine Wand (23) aufweist, an der durch eine seitliche Abbiegung die genannte Rille (25) gebildet ist.

9. Hilfsteil nach den Ansprüchen 1 und 6 oder 7,
dadurch gekennzeichnet,
daß das Einsatzteil (10;13) des genannten anderen Prothesenteils (1) ein gestanztes und geprägtes Blechteil ist, das hinter dem genannten Gegenlager (5,11;18,19) eine Abwinkelung (22) als den genannten Anschlag und/oder Anlagefläche zur Positionierung aufweist.

## Claims

1. An auxiliary element for removably securing a partial dental prosthesis (2) to a fixed prosthetic element (1) in a connection (1, 3) of the two prosthetic parts (1; 2) in which said parts (1; 2) are interlockable and in the final position are rigidly but releasably joined together and secured by a locking device (4; 14) braced against the one prosthetic element (2) and resiliently latching behind an inclined heel (5, 11; 18, 19) of the other, particularly the fixed prosthetic element (1), wherein a prefabricated inset (10; 13) of the given other prosthetic element (1) or of its model or of its mould forms the heel with an inclined contact surface (11; 19) for the locking device such that the locking device (4; 14) does not abut any other surface.

2. The auxiliary element according to claim 1,
characterised in that
the inset (10; 13) of the given other prosthetic element (1) is made of an alloy with a high melting point to permit the remainder of the given other prosthetic element (1) to be cast together with it.

3. The auxiliary element according to claim 1,
characterised in that
the inset of the model consists of a plastic burned off during casting.

4. The auxiliary element according to claim 1,
characterised in that the inset of the mould consists of ceramic material.

5. The auxiliary element according to any of claims 1 to 4,
characterised in that
it furthermore forms a groove (25) as a guide for the interlocking movement of the two prosthetic elements (1; 2).

6. The auxiliary element according to any of claims 1 to 5,
characterised in that
it furthermore forms a stop (22) to limit the interlocking movement of the two prosthetic elements (1; 2).

7. The auxiliary element according to any of claims 1 to 6,
characterised in that
it furthermore has at least one contact surface (22; 23; 24) for positioning a housing (15) holding the locking device (14) in relation to the heel (18) during the moulding of the given one prosthetic element (2).

8. The auxiliary element according to claims 1 and 5,
characterised in that the inset (10; 13) of the given other prosthetic element (1) is a punched and stamped sheet metal piece having a wall (23) before the given heel (5, 11; 18, 19), with the given groove (25) being formed by bending the wall to one side.

9. The auxiliary element according to claims 1 and 6 or 7,
characterised in that
the inset (10;13) of the given other prosthetic element (1) is a punched and stamped sheet metal piece having an angled off part (22) behind the given heel (5, 11; 18, 19), serving as the given stop and/or contact surface for the positioning.

## Revendications

1. Pièce auxiliaire pour fixer une partie (2) de prothèse dentaire amovible sur une partie (1) de prothèse dentaire fixe pour former un assemblage (1, 3) des deux parties (1; 2) de prothèse dentaire, dans lequel les deux parties (1; 2) de prothèse dentaire peuvent être glissées l'une dans l'autre et être assemblées, dans leur position finale, de manière rigide mais amovible et être fixées à l'aide d'un verrou (4; 14) qui est appuyé contre l'une partie de prothèse dentaire (2) et qui s'agrippe par effet de ressort derrière une contre-butée (5, 11; 18, 19) inclinée de l'autre partie de prothèse dentaire (1), en particulier la partie fixe, une pièce intercalaire préfabriquée (10; 13) de l'autre partie de prothèse dentaire (1) mentionnée ou son modèle ou son moule formant la contre-butée avec une surface de butée (11; 19) inclinée pour le verrou (4; 14) de telle manière que le verrou (4; 14) n'est en contact avec aucune autre surface.

2. Pièce auxiliaire selon la revendication 1, caractérisée en ce que la pièce intercalaire (10; 13) de l'autre partie de prothèse (1) mentionnée est constituée par un alliage à point de fusion élevé pour pouvoir être coulée en même temps que l'autre partie de prothèse (1) mentionnée.

3. Pièce auxiliaire selon la revendication 1, caractérisée en ce que la pièce intercalaire du modèle est constituée par un matériau qui brûle lors du coulage.

4. Pièce auxiliaire selon la revendication 1, caractérisée en ce que la pièce intercalaire du moule de coulée est constituée par un matériau céramique.

5. Pièce auxiliaire selon une quelconque des revendications 1 à 4, caractérisée en ce qu'elle forme en outre une rainure (25) comme guide pour le glissement l'une dans l'autre des deux parties (1; 2) de prothèse dentaire.

6. Pièce auxiliaire selon une quelconque des revendications 1 à 5, caractérisée en ce qu'elle forme en outre une butée (22) pour limiter le glissement l'une dans l'autre des deux parties (1; 2) de prothèse dentaire.

7. Pièce auxiliaire selon une quelconque des revendications 1 à 6, caractérisée en ce qu'elle présente en outre au moins une surface de butée (22; 23; 24) pour le positionnement d'un bâti (15) contenant le verrou (14) dans la position correspondant à la contrebutée (18) lors du modelage de l'une des parties de prothèse dentaire (2) mentionnée.

8. Pièce auxiliaire selon les revendications 1 et 5, caractérisée en ce que la pièce intercalaire (10; 13) de l'autre partie (1) de prothèse mentionnée est une pièce en tôle emboutie et estampée qui présente une paroi (23) pour la contre-butée (5, 11; 18, 19) mentionnée sur laquelle est formée la rainure (25) mentionnée par un coude latéral.

9. Pièce auxiliaire selon les revendications 1 et 6 ou 7, caractérisée en ce que la pièce (10; 13) de l'autre partie (1) de prothèse mentionnée est une pièce en tôle emboutie et estampée qui présente derrière la contre-butée (5, 11; 18, 19) un coude (22) formant la butée et/ou la surface de butée mentionnée pour le positionnement.
